Europäisches Patentamt

European Patent Office

Office européen des brevets

(11) Publication number: **0 286 137**
**A1**

# EUROPEAN PATENT APPLICATION

(21) Application number: 88105671.7

(22) Date of filing: 09.04.88

(51) Int. Cl.4: **C02F 1/48** , **B03C 1/28**

(30) Priority: 09.04.87 DK 1834/87

(43) Date of publication of application:
**12.10.88 Bulletin 88/41**

(84) Designated Contracting States:
**AT BE CH DE ES FR GB GR IT LI LU NL SE**

(71) Applicant: **NORDRILL A/S**
**Duedal 70**
**DK-9230 Svenstrup(DK)**

(72) Inventor: **Nielsen, Knud**
**Duedal 70**
**DK-9230 Svenstrup(DK)**

(74) Representative: **Patentanwälte Wenzel &**
**Kalkoff**
**Grubes Allee 26 Postfach 730466**
**D-2000 Hamburg 73(DE)**

(54) **Apparatus for magnetic treatment of flowing liquid.**

(57) In an apparatus for the magnetic treatment of flowing liquid the pole shoes (13, 15, 23, 24), on each side of a cylindrical ring-shaped permanent magnet (14), extend radially inward over and against each other within the cylinder space (21) of the magnet, thus to form a narrow magnet field gap (22, 29), through which the liquid must flow on its way from the inlet (8) to the outlet (7). By this construction the magnetic field lines are brought from the periphery towards the centre and there is attained a denser magnetic field in the treatment area.

Fig. 1

## Apparatus for magnetic treatment of a flowing liquid

The invention concerns an apparatus for the magnetic treatment of a flowing liquid, comprising a flow-through housing with an inlet and an outlet for the liquid and a cylindrical ring-shaped permanent magnet with radially directed pole shoes, which permanent magnet is arranged in the flow-through housing in such a way that the liquid can flow into the magnet's cylinder space and through a ring-shaped magnet field gap delimited by the pole shoes.

An apparatus of this type is used for the magnetic treatment of a flowing liquid, for example, water, with the intent of preventing precipitation of dissolved substances as well as the corrosive action of the liquid on the ducts and the equipment which the liquid gets into contact with.

Apparatuses for the magnetic treatment of liquids are well known from the Norwegian patent documents nos. 111 292, 112 454 and 131 006. These known apparatuses are particularly developed for the magnetic treatment of water of the kind which may provoke calcareous deposits of the boiler scale type or corrosion.

It is an object of the invention to obtain a stronger magnetic field/denser field lines in the treatment region with the same size magnet. To attain this, it is, according to the invention, suggested to bring the active magnetic field inward from the periphery and toward the centre of the cylindrical ring-shaped permanent magnet. According to the invention, an apparatus as mentioned in the introductory paragraph is characterized in that the pole shoes extend radially inward over and against each other within the cylinder space and delimit the magnet field gap therein.

In such an arrangement the field will be brought inward from the periphery and towards the centre and there are attained stronger/denser field lines in the treatment region with the same amount of magnet. The liquid which is being treated will only flow in the magnet's cylinder space.

An advantageous embodiment of the new apparatus is characterized in that the inlet and the outlet are on the same end side of the cylinder space of the permanent magnet. This provides for a compact arrangement.

A particularly advantageous embodiment incorporating the invention is characterized in that one of the pole shoes has a central axial opening, whose edge region on the side of the cylinder space forms one delimitation of the magnet field gap, the pole shoe furthermore having at least one excentric axial opening radially outward of the magnet field gap, which openings have a flow-through connection with the inlet and the outlet in the flow-through housing, respectively.

For obtaining an optimal effect of the magnetic field, it should be aimed at obtaining constant linear water velocity through the treatment region (the magnet field gap). In, for example, a water installation the water pressure will possibly vary and to compensate for this, in order to attain the mentioned optimal magnetic field effect, it is proposed, according to the invention, to provide the apparatus with a self-regulating treatment cross-section (magnet field gap). One may attain this, according to a preferred embodiment of the invention, by providing a force-loaded liquid-constricting means for the magnet field gap, which is operable for opening by the action of liquid pressure. Such a force-loaded liquid-constricting means will be operated by the water pressure and open the treatment cross-section more or less. Thus, one may, at least approximately, attain constant average linear water velocity through the magnet field gap.

In this connection an advantageous practical embodiment of the apparatus is an embodiment wherein the liquid-constricting means has the shape of a cylindrical grid cage body, having wall portions which are liquid-tight in the region near the magnet field gap and whose extension varies in the axial direction, which body is guided in flush coaxial bores in the pole shoes. The liquid pressure will move the grid cage body, whereby the mentioned liquid-tight wall portions will be displaced in relation to the magnet field gap. Because the liquid-tight wall portions have varying extensions in the axial direction, the flow through the magnetic field gap will be correspondingly regulated thereby. The use of a grid cage body implies that it may, at the same time, operate as a filter or sieve which is desirable in many instances.

The liquid-constricting means as mentioned may advantageously be force-loaded with a spring but may also be magnetically force-loaded.

According to an expedient embodiment of the invention, it is furthermore proposed to provide the magnetic field gap with means for obtaining a turbulent flow in the magnetic field gap. The intent with this is to increase the effective speed for the charged particles in the treatment region and to ease the release of dissolved gasses in/near the magnet field gap, that is, guide the liquid towards chemical nonequilibrium. This will ease the production of micro products (nucleation centers) and possibly cause a modification of existing nucleation centers in the magnetic field.

According to another embodiment of the invention, it is also proposed to construct the apparatus in such a way that the magnet field gap comprises means for attaining an inhomogeneous magnetic field. The intent with this is to secure attainment of an average enhanced local concentration of paramagnetic ions/particles, possibly also diamagnetic, in the magnetic field. This will give a higher concentration which again will bring about that new particles/nucleation centers are more easily formed in the field, and, eventually, that particles/nucleation centers, which follow the liquid flow, grow more easily / are enhanced.

The previously mentioned force-loaded liquid-constricting means is held to have an independent inventive merit and, according to the invention, there is therefore also sought protection for an apparatus for magnetic treatment of a flowing liquid, comprising a flow-through housing with an inlet and an outlet for the liquid and a permanent magnet placed in the housing with pole shoes, which delimit a magnet field gap, through which the fluid can flow between the inlet and the outlet, characterized by a force-loaded liquid-constricting means for the magnet field gap, which means is operable for opening by the action of liquid pressure. As previously mentioned, the force-loading can be done by means of a spring or advantageously by exploitation of magnetic forces.

Also, the means for attaining turbulent flow and the means for attaining an inhomogeneous magnetic field are held to have independent inventive merit and, according to the invention, there is therefore also sought protection for an apparatus for magnetic treatment of a flowing liquid, comprising a flow-through housing with an inlet and an outlet for the liquid and a permanent magnet placed in the housing with pole shoes, which delimit a magnet field gap, through which the fluid can flow between the inlet and the outlet, characterized in that the magnet field gap comprises means for attaining turbulent flow in the magnet field gap and/or means for attaining an inhomogeneous magnetic field.

The invention will be more closely described with reference to the drawings, wherein

Fig. 1 shows a sectional view of an embodiment of an apparatus according to the invention,

Fig. 2 shows a section through another embodiment of an apparatus according to the invention, 

Fig. 3 shows a section through a third embodiment of an apparatus according to invention,

Fig. 4 shows, on an enlarged scale, the embodiment of the grid cage element used in the apparatus according to fig. 3, shown in an expanded state, and

Fig. 5 shows a section through an embodiment according to the invention of the previously mentioned more general type.

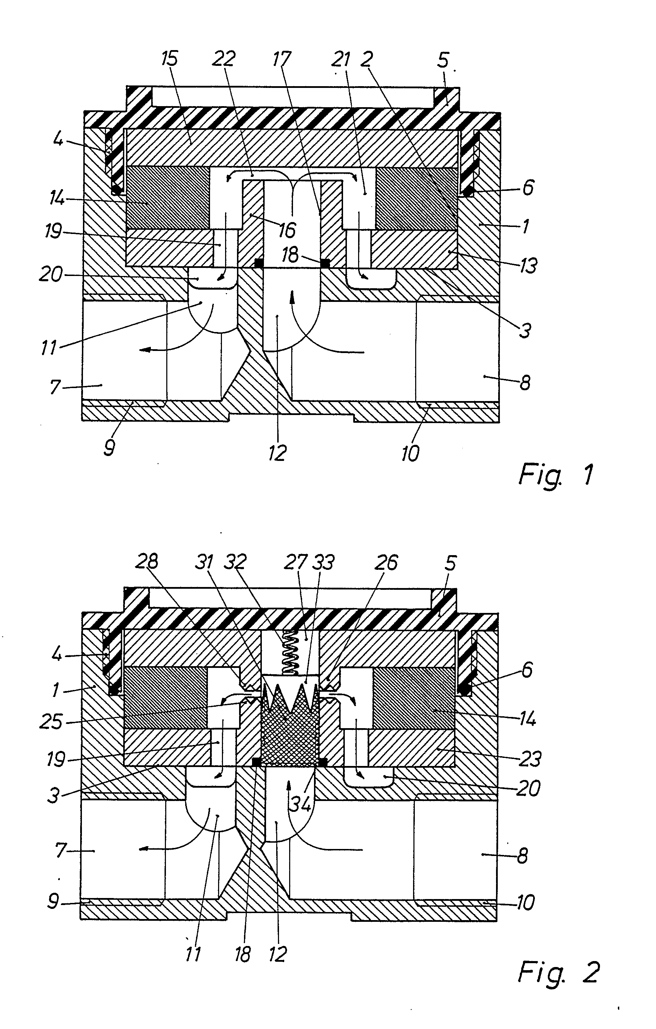

The apparatus shown in section in fig. 1 includes a circular cylindric plastic housing 1 with a central axis which is vertical in fig. 1. The housing 1 is shaped with a circular cylindric space 2 which is open toward one end side and whose end closure is denoted 3. The outer part of the space 2 is expanded and provided with a thread 4. A plastic lid 5 is provided with a thread and screwed into position in the housing 1 in the threaded part 4, as shown in fig. 1. In the passage between the threaded part 4 and the remainder of the space 2 there is fitted an O-ring 6, which is compressed by the lid 5 when the latter is screwed on as shown.

In the lower part of the housing 1, as shown in fig. 1, there are machined two ducts 7 and 8. The duct 7 is provided with a threaded portion 9, and the duct 8 is provided with a threaded portion 10. Tubes/couplings may be screwed into these threaded portions 9 and 10 so that by these means the housing 1 may be connected into, for example, a water tubing.

As shown, the two ducts 7 and 8 are machined as blind bores, which are connected with the space 2 via side bores 11 and 12, respectively.

In the space 2 there is placed a first pole shoe 13 on the bottom 3. On and above it there is placed a cylindrical ring-shaped permanent magnet 14, and on the latter again there is placed another pole shoe 15. The two pole shoes and the permanent magnet are pressed together against the end closure 3 by the action of the lid 5.

As shown, the first pole shoe 13 is shaped as a circular symmetric disc member with a central elevation 16 which has a through-going bore. The through-going bore is denoted as 17. This bore 17 communicates with the previously mentioned transverse bore 12 and thus with the inlet duct 8. An O-ring 18 is fitted in-between the end closure 3 and the pole shoe 13 around the bore 17.

Around the elevation or stub 16 there are provided a plurality of through-going openings 19 in the pole shoe 13. Similarly there is, in the end bottom 3, provided a ring channel 20 which communicates with the transverse bore 11 and thus with the outlet duct 7.

Between the pole shoe 13, 16 and the pole shoe 15 there is formed a ring-shaped magnet field gap 22 within the cylinder space 21 of the permanent magnet 14.

If, for example, the apparatus shown in fig. 1 is coupled into a water-guiding tube, the duct 8 may, for example, provide an inlet for the water, while the duct 7 provides an outlet. Water entering the inlet 8 will continue through the transverse bore 12, up through the bore 17 and radially outward through the magnet field gap 22, further down through the cylinder space 21 in the permanent magnet and through the ring channel 20 to the transverse bore 11 and further on through the outlet 7.

The apparatus according to the invention shown in fig. 2 differs from the one shown in fig. 1 only in that the pole shoes are shaped differently, and in that there is mounted a liquid-constricting means. Therefore, the same reference numerals (designators) are used for components which correspond to those shown in fig. 1.

In fig. 2 the first pole shoe, that is the one which lies on the bottom 3 in the space 2, is mainly shaped as the pole shoe 13 is fig. 1, but on the ring-shaped end face of the central elevated portion, which faces the upper pole shoe 24, this pole shoe 23 is provided with two ring-shaped ridges 25. The other pole shoe 24 is mainly shaped in the same way as the pole shoe 23 and also has a central elevation 26 and a through-going, central bore 27 as well as an end face 28 provided with ring-shaped ridges on the elevation 26 but lacks the excentrically placed openings which correspond to the openings 19 in the embodiment according to fig. 1. Between the ring-shaped end faces 25, 28, which carry ring-shaped ridges, there is formed a magnet field gap 29.

Within the central through-going bores 30 and 27, respectively, of the pole shoes 23, 24 there is placed a circular cylindrically shaped grid cage body 31 which is force-loaded in the downward direction, as seen in fig. 2, by means of a spring 32. In the region of the magnet field gap, the grid cage body 31 is provided with wall portions 33 which are impenetrable by liquid. These liquid-tight wall portions have a width which varies in the axial direction as shown. In fig. 2 the body 31 rests against a narrow bottom edge 34.

The liquid flow entering through the duct 8 will affect the body 31, that is, lift it more or less against the force-loading brought about by the spring 32. Thereby also the flow-through area in the magnet field gap 36 is varied because the liquid-tight wall portions 33 will cover larger or smaller parts of the flow-through cross-section.

The ring-shaped ridges 25, 28 will provide a desired turbulence in the magnet field gap 29 and will, at the same time, also provide a desired inhomogeneity in the magnetic field.

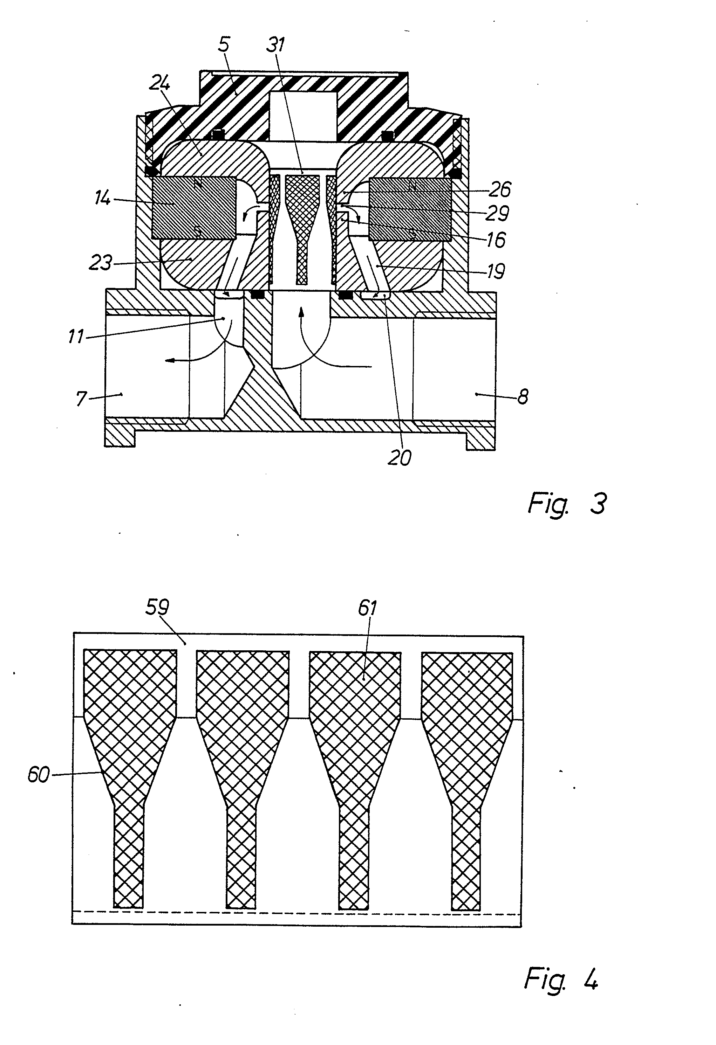

The embodiment of the apparatus according to the invention as shown in fig. 3 differs from the preceding one (fig. 2) in particular owing to the shape of the pole shoes 23, 24 and by the construction of the grid cage body 31. Here the shape of the pole shoes is characteristic in the provision of rounded edges so that a cross-section through the pole shoe and magnet 14 is substantially elliptic, superelliptic or round. Thereby there is attained a larger concentration of magnetic field lines in the field gap 29.

Otherwise the same reference numerals/designators as in fig. 1 and fig. 2 have been used for the same constructional details and parts. Yet only the main parts have been provided with reference designators. The housing of the apparatus in this instance is meant to be manufactured from a non-magnetic metal such as brass.

The through-going bores have a smaller diameter and are tilted. This provides for a more compact apparatus and the area of the openings becomes about the same as their number can be increased.

The construction of the grid cage body 31 is different from the one shown in fig. 2. The body 31 in this instance comprises a cylinder-shaped casing 59 with four equal apertures 60 which are pointed toward the lower edge of the casing. On the inside of the casing there is a metal grid mesh 61. The magnetic field will seek to hold the grid cage body 31 in the middle of the central bore 17, while the water pressure will seek to press the body upward. Thus an equilibrium will arise between the action of the magnetic field on the body and the water pressure.

At low water pressure the large almost square parts of the apertures will stand in front of the magnet field gap 22. If the water pressure is increased the body will be pushed upward and the trapezoidally shaped parts of the apertures will come in front of the magnet field gap, and finally the extended rectangular parts come in front of the magnet field gap 22. Thus it is attained that the water volume flow through the magnet field gap becomes fairly constant independently of the water pressure in the inlet duct 8.

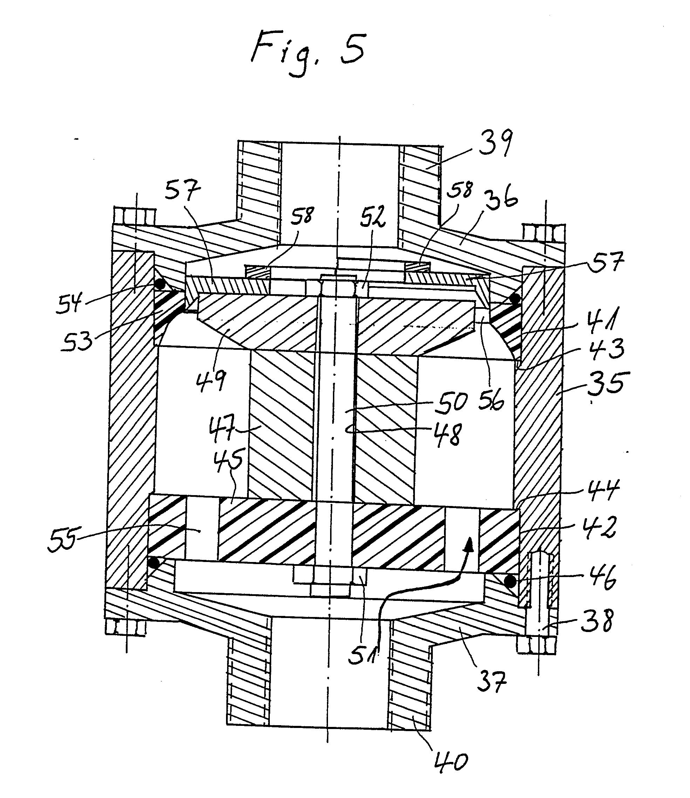

The apparatus for magnetic treatment of a flowing liquid, as shown in fig. 5, includes a three-part housing comprising a circular cylindric intermediate part 35 and end closures 36 and 37, respectively. The end closures 36, 37 are bolted to the intermediate part 35 by means of screws 38. Each end closure has a threaded stud 39, 40 for coupling to liquid-guiding tubes or the like.

The intermediate part 35 has an upper and a lower inner portion 41 and 42, respectively, which are formed with a larger diameter and provide inner ring-shaped shoulders 43 and 44, respectively. A first pole shoe 45 is placed against the lower ring shoulder 44 and held in place by the end closure 37. An O-ring 46 is placed between the end closure, the pole shoe 45 and the intermediate part 35.

A permanent magnet 47 with a through-going bore 48 is placed on the pole shoe 45. On top of this permanent magnet 47 there is placed another pole shoe 49. The pole shoes 45, 49 and the magnet 47 are held together by means of a bolt 50 having threads at both ends, and which goes through the central bore 48 in the magnet 47 and through corresponding bores in the two pole shoes. On the respective threaded ends of the bolt there are mounted nuts 51, 52.

The housing part 35 is ferromagnetic. In the upper portion of this intermediate housing part there is, against the upper ring shoulder 43, placed a ring of ferromagnetic material, which is denoted as 53. This ring is held in place by means of an upper end closure 36. Between the end closure 36, the ring 53 and the housing part 35 there is placed an O-ring 54.

The liquid which shall be treated, for example water, may flow in through the stud 40 as indicated with the arrow and up through the housing, as the water can flow through a plurality of bores 55 in the lower pole shoe 45. The water flows further up and through the ring-shaped magnet field gap 56 formed between the other pole shoe 49 and the ring 53. Then the water flows further on and out through the stud 39.

Over the other pole shoe 49 there is placed a loose ring of a suitable material, for example plastics. This ring is denoted 57 and in the left part of the figure it is shown in a position where it rests against the pole shoe 49 so that the ring does in fact close the gap 56, while in the right part of fig. 5 the ring is shown in a lifted state, that is, in a position wherein the ring does not constrict the magnet field gap 56. A ring 58 of ferromagnetic material is arranged on the upper side, as seen in fig. 5, of the constricting ring 57 and thus operates as a force-loading element which forces the ring 57 towards the position shown in the left half of fig. 3. The liquid flow through the housing will affect the ring 57 and lift it to a larger or smaller extent, whereby there is attained a self-regulating treatment cross-section (magnet field gap).

Instead of the ring 58 there may, of course, also be arranged a spring which forces the ring 57 in the direction toward the pole shoe 49.

## Claims

1. Apparatus for the magnetic treatment of a flowing liquid, comprising a flow-through housing (1) with an inlet and an outlet (7, 8) for the liquid and a cylindrical ring-shaped permanent magnet (14) with radially directed pole shoes (13, 15), which permanent magnet is arranged in the flow-through housing in such a way that the liquid can flow into the magnet cylinder space (21) and through a ring-shaped magnet field gap (22) delimited by the pole shoes,
characterized in that the pole shoes (13, 15; 23, 24) extend radially inward over and against each other within the cylinder space (21) and delimit the magnet field gap (22; 29) therein.

2. Apparatus according to claim 1,
characterized in that both the inlet and the outlet (7, 8, 11, 12) are at the same end side of the cylinder space (21) of the permanent magnet (14).

3. Apparatus according to claim 1 or 2,
characterized in that one of the pole shoes (13; 23) has a central axial opening (17; 30) whose edge region on the side of the cylinder space forms one delimitation of the magnet field gap (22; 29) and furthermore has at least one excentric axial opening (19) radially outward of the magnet field gap (22; 29), which openings (19) have a flow-through connection (11, 20, 12) with the inlet and the outlet in the flow-through housing (1), respectively.

4. Apparatus according to any one of the preceding claims,
characterized by a force-loaded liquid-constricting means (31) for the magnet field gap (29) which means (31) is operable for opening by the action of liquid pressure.

5. Apparatus according to claim 4,
characterized in that the liquid-constricting means has the shape of the cylindrical grid cage body (31) having wall portions (33) which are fluid-tight in the region near the magnet field gap (29) and whose extension varies in the axial direction, said body (31) being guided in flush coaxial bores (27,30) in the pole shoes (24,23).

6. Apparatus according to claim 4 or 5,
characterized in that the liquid-constricting means (31) is force-loaded with a spring (32).

7. Apparatus according to claim 4 or 5,
characterized in that the liquid-constricting means is magnetically force-loaded.

8. Apparatus according to any one of claims 1 to 7,
characterized in that the magnet field gap (29) comprises means (25, 28) for attaining a turbulent flow in the magnetic field.

9. Apparatus according to any one of claims 1 to 8,
characterized in that the magnet field gap (29) comprises means (25, 28) for attaining an inhomogeneous magnetic field.

10. Apparatus according to claim 8 or 9,
characterized in that the means (25, 28) for attaining an inhomogeneous magnetic field comprise ring-shaped ridges (25, 28) on one or both of the pole shoe regions delimiting the magnet field gap (29).

11. Apparatus for the magnetic treatment of a flowing liquid, comprising a flow-through housing (35-37) with an inlet and an outlet (40, 39) for the liquid and a permanent magnet (47) placed in the housing with pole shoes (45, 49) which deli mit a magnet field gap (56) through which the fluid can flow between the inlet and the outlet,

characterized by force-loaded liquid-constricting means (57) for the magnet field gap (56) which means (57) is operable for opening by the action of liquid pressure.

12. Apparatus for the magnetic treatment of a flowing liquid, comprising a flow-through housing (35-37) with an inlet and an outlet (40, 39) for the liquid and a permanent magnet (47) placed in the housing with pole shoes (45,49) which delimit a magnet field gap (56) through which the fluid can flow between the inlet and the outlet,
characterized in that the magnet field gap comprises means for attaining turbulent flow in the magnet field gap and/or means for attaining an inhomogeneous magnetic field.

Fig. 1

Fig. 2

Fig. 3

Fig. 4

# Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | EP-A-0 068 760  (S.F.SVERRE et al.)  <br> * Figures 1-4 *  <br> --- | 1-3 | C 02 F    1/48 <br> B 03 C    1/28 |
| Y | GB-A-2 023 116  (B. STRUTT)  <br> * Figures 1-3 *  <br> --- | 1-3 | |
| A | FR-A-2 236 788  (O. FJELDSEND)  <br> * Page 3, line 26 - page 5, line 30 *  <br> --- | 1-4 | |
| A | DE-B-1 084 412  (PHILIPS)  <br> * Whole document *  <br> --- | 1-4 | |
| A | FR-A-1 177 897  (R.E.P.)  <br> * Whole document *   , <br> --- | 1-3,11-12 | |
| A | FR-A-2 312 017  (CLEMENT-DANIEL)  <br> * Pages 2-5 *  <br> ----- | 1-7 | |

|  |  |  | TECHNICAL FIELDS SEARCHED (Int. Cl.4) |
|---|---|---|---|
|  |  |  | C 02 F <br> B 03 C |

The present search report has been drawn up for all claims

| Place of search | Date of completion of the search | Examiner |
|---|---|---|
| THE HAGUE | 15-07-1988 | VAN AKOLEYEN H.T.M. |